# EUROPÄISCHE PATENTSCHRIFT

(11) **EP 1 049 366 B1**
(45) Veröffentlichungstag und Bekanntmachung des Hinweises auf die Patenterteilung: **28.08.2002**
(21) Anmeldenummer: 99906055.1
(22) Anmeldetag: 16.01.1999
(51) Int. Cl.: A01D 25/04, A01D 31/00

(54) **VORRICHTUNG ZUM RODEN, ABFÖRDERN UND REINIGEN VON WURZELFRÜCHTEN, INSBESONDERE ZUCKERRÜBEN**
DEVICE FOR PULLING UP, TRANSPORTING AND CLEANING RADICULAR FRUIT, ESPECIALLY SUGAR BEET
DISPOSTIF POUR ARRACHER, DEPLACER ET NETTOYER DES FRUITS RADICULAIRES, EN PARTICULIER DES BETTERAVES SUCRIERES

(30) Priorität: 19.01.1998 DE 19801742; 18.04.1998 DE 19817321
(43) Veröffentlichungstag der Anmeldung: 08.11.2000
(73) Patentinhaber: Holmer, Alfons, 84069 Eggmühl (DE)
(72) Erfinder: Holmer, Alfons, 84069 Eggmühl (DE)
(74) Vertreter: Wasmeier, Alfons, Dipl.-Ing.
(86) Internationale Anmeldenummer: DE9900081
(87) Internationale Veröffentlichungsnummer: WO99035895

(56) Entgegenhaltungen:
- EP-A- 0 003 854
- DE-U- 9 417 558
- FR-A- 2 326 853
- US-A- 2 337 699
- US-A- 2 462 128

## Beschreibung

Die Erfindung bezieht sich auf eine Vorrichtung nach dem Oberbegriff des Anspruches 1.

Rodevorrichtungen dieser Art (DE-OS 20 41 595 und 29 37 544) weisen Fingerräder oder Hubräder mit Nabe und Fingerstern aus Gummi auf. Die Standzeit derartiger Vorrichtungen, insbesondere der Gummifinger, ist jedoch extrem gering und die Rübenklemmung nicht ausreichend. Auch ist der Schmutzabbau nicht zufriedenstellend.

Aus der DE-GM 83 34 718 ist ein Fingerrad mit elastischen und steifen Mitnehmerfingern bekannt, was eine aufwendige Konstruktion darstellt, die zu einer erheblichen Materialbeanspruchung und zu einem vorzeitigen Verschleiß führt.

Schließlich ist aus der PCT/WO 96/24241 eine Rodevorrichtung für Zuckerrüben bekannt, bei der dem Rodewerkzeug jeweils ein Fingerrad-Paar zugeordnet ist, dessen Finger als Stahlzinken ausgebildet sind, die in einem elastischen Lagerring gelagert sind. Hierbei soll eine sehr gute Selbstreinigung des Fingerradpaares und eine einwandfreie Rübenklemmung ermöglicht werden, wobei die Rodearbeit verlustarm und die Erdabscheidung intensiv sein soll. Bei schwierigen Bodenverhältnissen stellt sich jedoch heraus, daß die Reinigungswirkung auf die gerodeten Rüben und die in Verbindung damit erforderliche Säuberung der Rüben nicht zufriedenstellend ist, und daß für das Abführen der Rüben gesonderte Fördervorrichtungen unmittelbar im Anschluß an die Fingerräder erforderlich sind. Desweiteren wird die Klemmung der Rüben bei großem Erdanteil und Erde mit extrem hohem Feuchtigkeitsgehalt problematisch.

Des weiteren ist aus der US 23 37 699 bei einer Rodevorrichtung bekannt, Rodeschare in Verbindung mit Rübenförderrädern zum Erfassen und Fördern der gerodeten Rüben zu verwenden. Diese Förderräder sind käfigartig mit ebenen Flächen, die mit den Rüben in Eingriff kommen, ausgebildet und haben kegelstumpfförmige Gestalt. Der Käfig besteht aus einem oberen und einem unteren starren Ring. Zwischen den beiden Ringen sind Stäbe befestigt, die zusammen mit radialen Speichen die Räder versteifen. Die Räder sind aufeinander zu mittels Druckfedern vorgespannt und werden als starre Einheit ausgelenkt, wenn Rüben unterschiedlicher Größe oder Steine dazwischen gefördert werden. Die Radachsen sind zur Vertikalen geneigt angeordnet, so dass bei hoher Arbeitsgeschwindigkeit bzw. hoher Drehzahl die von den Rüben gelöste Erde hochgeschleudert wird.

Aufgabe der Erfindung ist, eine gattungsgemässe Vorrichtung mit rotierenden Reinigungsvorrichtungen, die eine Relativdrehung zwischen den Wurzelfrüchten und den die Wurzelfrüchte transportierenden und aufnehmenden Werkzeugen in möglichst rübenschonender Weise ausführen, sowie eine aus derartigen rotierenden Reinigungsvorrichtungen bestehende Förderstrecke anzugeben.

Gemäß der Erfindung wird dies mit den Merkmalen des Kennzeichens des Anspruches 1 erreicht. Weitere Ausgestaltungen der Erfindung sind Gegenstand der Unteransprüche. Nachstehend wird die Erfindung mit Rüben beschrieben; dieser Ausdruck umfaßt Wurzelfrüchte allgemein.

Die Vorrichtung nach der Erfindung besteht aus jeweils zu Paaren zusammengefaßten Reib- oder Rubbelwerkzeugelementen, die symmetrisch zu der Rübenzeile im Abstand zueinander so angeordnet sind, daß sie dazwischen jeweils die gerodeten Rüben aufnehmen. Die Anordnung der Werkzeugpaare kann dabei so gewählt werden, daß die Werkzeugelemente quer zur Rübenzeile angeordnet sind; alternativ können die beiden Werkzeugelemente eines Paares in Richtung der Rübenreihen versetzt zueinander, z.B. zick-zackförmig angeordnet sein, wobei der Abstand benachbarter Werkzeugelemente so gewählt wird, daß die Rüben auf ihrem Weg durch die Fördervorrichtung einwandfrei transportiert werden und nicht durchfallen. Diese Werkzeugelemente rotieren um eine stehende, vorzugsweise geneigte Achse, wobei die Neigung hin zu den Rodescharen verläuft und die Rotation der Achsen der beiden Werkzeugelemente einen Richtungssinn in Förderrichtung hat. Die Reib- oder Rubbelelemente bzw. -werkzeuge haben, z.B. eine umgekehrt Kelch-, Glocken-, Pokal- oder dgl. Form oder sind U- oder V-förmig ausgebildet, so daß zwischen jeweils zwei Elementen eines Paares ein Raum entsteht, der in etwa der Form einer Rübe mit daran anhaftendem Erdreich entspricht, wobei der minimale Abstand der Unterseite der beiden Elemente eines Paares voneinander einen Spalt d freiläßt, durch den die durch die Reib- oder Rubbelelemente von den Rüben gelöste Erde nach abwärts auf den Boden fallen kann.

Die Reib- oder Rubbelwerkzeuge sind beidseitig der Rübenreihen entsprechend den Rodewerkzeugen bzw. Rodescharen ausgebildet; letztere lockern die Rüben im Erdreich, heben sie an und fördern sie zusammen mit dem an den Rüben anhaftenden Erdreich zwischen dem Raum, der jeweils von einem Reib- oder Rubbelwerkzeug-Paar gebildet wird. Die rotierenden Reib- oder Rubbelwerkzeuge, die im entgegengesetzten Drehsinn zueinander rotierend angetrieben sind, nehmen die Rüben zwischen sich auf; die Flächen dieser rotierenden Werkzeuge sind elastisch nachgiebig oder federnd ausgebildet, derart, daß die Rüben durch die Drehbewegung der rotierenden Werkzeuge in Form des Rüben- und Erdreichstromes in Richtung der Rübenabförderung weitertransportiert werden und auf eine Förder- und/oder Siebvorrichtung gelangen, im Falle vorliegender Erfindung vorzugsweise in eine Vielzahl von weiteren Paaren von Reib- oder Rubbelwerkzeugen, die insgesamt die Förderstrecke für eine einzige Rübenzeile ausbilden. Sämtiche Reib- oder Rubbelwerkzeuge sind mit einem Teil des Maschinenrahmens befestigt und werden gemeinsam über die gesamte Maschinenbreite angetrieben. Die Umfangsflächen der Reib- und Rubbelwerkzeuge wirken paarweise zusammen, haben eine rübengerechte Form, sind höhenverstellbar dem Rodeschar zugeordnet angepaßt und neigungsverstellbar. Sie arbeiten ausschließlich oberirdisch, d.h. im Abstand über dem Erdboden, so daß der durch die Reib- und Rubbelwirkung von den Rüben gelöste Erdreichanteil durch den zwischen zwei zusammengehörigen Werkzeugen eines Paares gelöste Erdreichanteil nach abwärts auf den Boden fallen kann. Der untere Abschnitt der Reib- oder Rubbelwerkzeuge ist in radialer Richtung nach außen erweitert, so daß dort der Abstand zwischen den Umfangs- bzw. Mantellinien zweier Werkzeuge ein und desselben Paares klein im Vergleich zum Durchmesser einer Rübe ist.

Die Form der einzelnen Reib- oder Rubbelwerkzeuge ist jeweils die eines rotationssymmetrischen Körpers, der einer auf dem Kopf stehenden Glocke, einem auf dem Kopf stehenden Pokal oder dgl. angepaßt ist und der am unteren Umfangsbereich radial erweitert ist, um einen Durchgangsspalt längs der Längsachse der Rübenzeile zu ergeben. Die Umfangsflächen dieser rotierenden Werkzeuge sind sehr vielgestaltig ausgebildet. Sie können Haken aus Metall oder Kunststorf sein, die in Umfangsrichtung zueinander versetzt und etwa in Form von Knethaken ausgebildet sein können, so daß sie elastisch gelagert sind und/oder selbst als Haken zusätzlich elastisch oder federnd ausgebildet sind. Sie können ferner geschlossene Körper darstellen, die aus Kunststoff, Gummi oder dgl. elastisch nachgiebigem Material bestehen und aufgrund dieser Elastizität ein Ausweichen gegenüber Rüben ermöglichen, und sie können auf ihrer rotationssymmetrischen Umfangsfläche mit Stiften, Zapfen, Ansätzen, Noppen, Rippen oder dgl. radial nach außen vorstehenden Elementen versehen sein, die elastisch oder starr ausgebildet und gegenüber dem Raum zwischen den beiden Elementen eines Paares von Werkzeugen nachgiebig sind. Die Nachgiebigkeit kann dabei auf dem gesamten System eines einzelnen Werkzeugelementes oder auf bestimmten Abschnitten beruhen und ist in radialer Richtung ausgebildet, so daß die Umfangswandungen des jeweiligen Elementes federnd elastisch oder nachgiebig funktionieren.

Mit dem erfindungsgemäßen Vorschlag wird aufgrund der Relativdrehung zwischen den Rüben und den die Rüben transportierenden und aufnehmenden Elementen eine besonders zweckmäßige und vorteilhafte, an die individuellen Rübengrößen anpaßbare elastische Nachgiebigkeit erreicht, so daß eine schonende Behandlung der Rüben einerseits und eine besonders vorteilhafte Entfernung des mit den Rüben gerodeten und an den Rüben anhaftenden Erdreiches erzielt wird. Desweiteren wird durch eine Vielzahl derartiger rotierender Werkzeuge längs der Achse der jeweiligen Rübenreihe eine besonders zweckmäßige Weiterbeförderung der Rüben erreicht, wobei zusätzlich in einer solchen Reinigungs- und Förderstrecke die rotierenden Rubbelwerkzeuge zunehmend aus weicherem oder elastisch stärker nachgiebigem Material hergestellt sein können, um eine besonders vorteilhafte Reinigungswirkung zu erzielen.

Die Geräte bzw. Rubbelwerkzeuge sind durch Schnellverschlußkupplungen mit den Halterungen am Maschinenrahmen befestigbar und damit auf besonders einfache Weise auswechselbar.

Mit der erfindungsgemäßen Anordnung wird sowohl ein hoher Reinigungseffekt aufgrund der erzielten Reib- und Rubbelwirkung, der durch die hohe Drehzahl der rotierenden Werkzeugelemente unterstützt wird, als auch ein schonendes Aus- und Anheben sowie Weiterfördern der Rüben durch die elastisch nachgiebigen, rotierenden Werkzeuge bzw. Werkzeugelemente erreicht. Bei einer Anordnung der Werkzeuge mit Zinken ergibt sich der besondere Vorteil, daß die Rüben so eng wie möglich umfaßt werden, wodurch aufgrund der Relativbewegung zwischen Rüben und Zinken eine intensive Reinigung der Rüben sichergestellt sind. Aufgrund der elastisch nachgiebigen rotierenden Werkzeuge bzw. Werkzeugelemente ist ein Ausweichen der Werkzeuge beim Auftreffen auf Hindernisse, z.B. Steine, Sperrgut, oder auch zu große Rüben während des Rodevorganges gewährleistet. Der Gesamtkörper der rotierenden Werkzeuge kann wahlweise aus Kunststoff, Gummi oder dgl. elastisch nachgiebigem Material bestehen bzw. elastisch nachgiebig gelagert sein, oder aber die Werkzeugelemente sind in Form von Einzelfingern bzw. Einzelzinken gefedert in einem Kernkörper eingegossen oder anderweitig elastisch gelagert und/oder ausgebildet.

Die Umfangsgeschwindigkeit der Reib- und Rubbelwerkzeuge ist erheblich größer als die Fahrgeschwindigkeit, die Werkzeuge sind in ihrer Drehzahl regelbar angetrieben, wobei die Werkzeuge eines Paares mit unterschiedlicher Drehzahl angetrieben werden können. Ferner können die Werkzeuge fahrgeschwindigkeitsabhängig mit einstellbarer Voreilung angetrieben sein, wobei die Einzelfinger oder Einzelzinken der Werkzeuge eines Paares in der Regel ineinandergreifend zusammenwirken.

Nachstehend wird die Erfindung in Verbindung mit der Zeichnung anhand von Ausführungsbeispielen dargestellt.
- Fig. 1: zeigt eine Aufsicht auf eine Rübenreihe mit zu beiden Seiten der Rübenreihe angeordneten Scharwerkzeugen und Reib- und Rubbelwerkzeugen,
- Fig. 2: eine schematische Seitenschnittansicht längs der Schnittlinie I-I der Fig. 1,
- Fig. 3: in schematischer Darstellung eine Schnittansicht längs der Linie II-II der Fig. 1,
- Fig. 4: eine Schnittansicht entsprechend der Darstellung in Fig. 2 in detaillierterer Ausbildung, wobei das zur Arbeitsrichtung parallele zweite Element nur angedeutet ist,
- Fig. 5: eine Seitenansicht ähnlich der Fig. 4,
- Fig. 6: eine schematische Darstellung einer Gesamtaufsicht auf eine Reinigungs- und Förderstrecke nach der Erfindung,
- Fig. 7: in vereinfachter Darstellung und in Seitenansicht ein Reib- und Rubbelwerkzeug bestehend aus einer Lagerung bzw. aus einem Lagerring und einer Vielzahl an diesem Lagerring federnd gelagerten Zinken;
- Fig. 8: eine Schnittansicht durch eine andere Ausführungsform eines Körpers eines Rubbelelementes, und
- Fig. 9: eine weitere Ausführungsform durch einen Körper eines Rubbelelementes nach der Erfindung;
- Fig. 10: in einer Darstellung ähnlich Figur 7, eine weitere Ausführungsform des Reib - und Rubbelwerkzeuges mit an einem Lager federnd gelagerten Zinken.

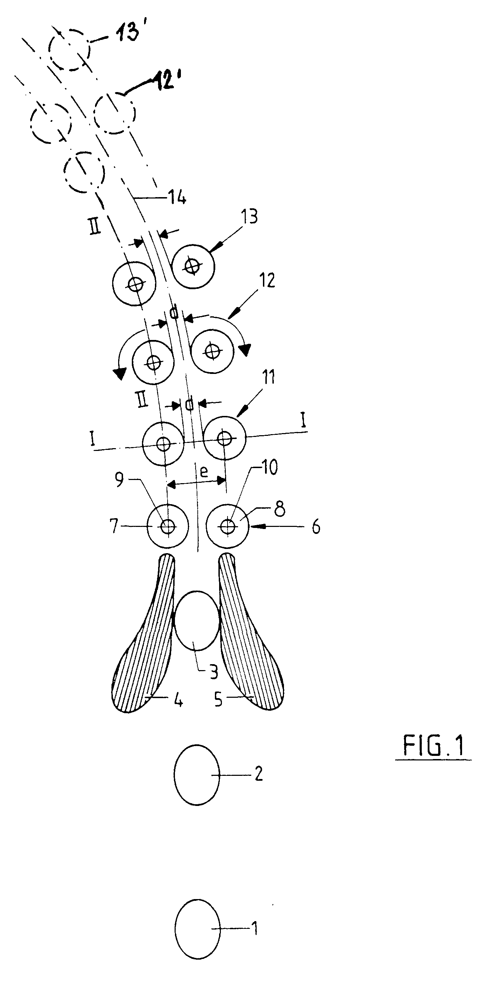

In Fig. 1 ist mit 1, 2, 3 eine Rübenreihe angedeutet. Die Rodewerkzeuge in Form von Rodescharpaaren 4, 5, die zu beiden Seiten der Rübenreihe in das Erdreich eingreifen und die Rüben lockern, anheben sowie fördern, sind auf der Rübeneinlaufseite pfeilförmig schräg nach außen gerichtet und übergeben die Rüben an Reib- oder Rubbelelemente 6, die paarweise nebeneinander (7, 8) oder auch hintereinander im Abstand voneinander und ggf. versetzt (z.B. zick-zackförmig) zueinander angeordnet und rotierend angetrieben sind, derart, daß sie um ihre Achsen 8, 9 jeweils in Pfeilrichtung drehen. Diese Rubbelwerkzeuge bzw. Rubbelrotoren sind in Form von Mini-Siebsternen ausgebildet, die sich nach unten erweitern und die gerodeten Rüben aufnehmen. Die Rubbelwerkzeugelemente sind um eine im wesentlichen stehender Achse rotierend angeordnet, und zu den Rodescharen so angeordnet, daß die Achsen der beiden Werkzeugelemente eine Rotation in Förderrichtung ergeben.

Mit 10 ist eine Schnittlinie I - I bezeichnet, die durch das Paar 11 von voneinander beabstandeten Werkzeugelementen geht, während die Linie II - II einen Schnitt durch zwei hintereinander angeordnete Werkzeugelemente von Werkzeugelementpaaren 12, 13 zeigt. Die einzelnen Werkzeugelemente eines jeden Rodewerkzeuges sind voneinander beabstandet, so daß ausreichend Platz besteht, damit das an den gerodeten Rüben haftende Erdreich leicht nach abwärts fallen kann. Dabei zeigt Fig. 1 eine Anordnung der Werkzeugelemente, die quer zur Förderachse 14 angeordnet sind, während die beiden miteinander zusammenwirkenden Werkzeugelemente der Paare 6, 11, 12, 13 in Richtung der Förderachse auch zueinander versetzt (12', 13') angeordnet sein können. Der Abstand zwischen jeweils zwei zugehörigen Werkzeugelementen bildet dabei einen Reinigungs- und Förderkanal bzw. eine Reinigungs- und Förderstrecke, längs der die gerodeten Rüben weitertransportiert werden. Die Drehrichtung der Werkzeugelemente ist mit Pfeilen angeduetet, die eine entgegengesetzt gerichtete Drehbewegung der Werkzeugelemente darstellen.

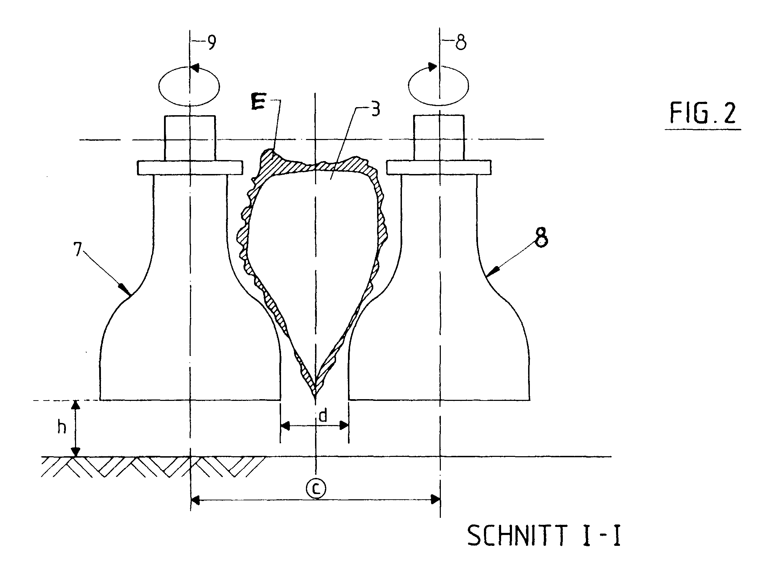

Bei der Darstellung nach Fig. 2 sind zwei ein Werkzeug bildende Rodeelemente 7, 8 dargestellt, die mit ihren sich nach unten erweiternden Rotations-Begrenzungsflächen eine Rübe 3 aufnehmen. Die Unterseite der Elemente 7, 8 ist in einer Arbeitshöhe h über dem Erdboden angeordnet, die beiden Elemente 7,8 haben im unteren, erweiterten Bereich einen Abstand a und sind in ihrem oberen Bereich durch eine gemeinsame Antriebsverbindung angetrieben, die die beiden Rotationsachsen in entgegengesetzter Richtung drehen.

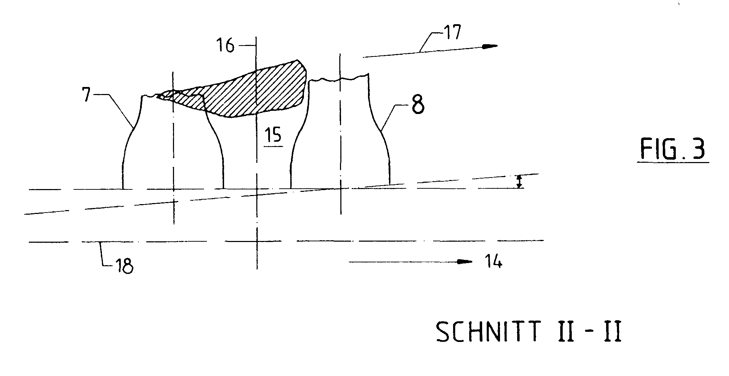

in Fig. 3 sind in Seitenansicht zwei in Förderrichtung 14 hintereinander angeordnete Werkzeugelemente 12, 13 dargestellt, die in Richtung des Förderkanals 15 mit Achse 16 versetzt sind (Pfeil 17), und bei denen die ansteigende Arbeitshöhe über dem Boden 18 gezeigt ist, die einen Neigungswinkelförderweg 17 in Richtung der Rübenförderung ergibt.

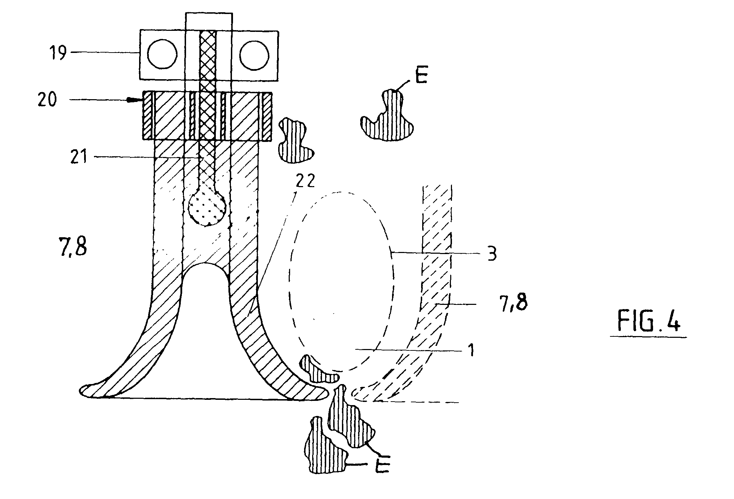

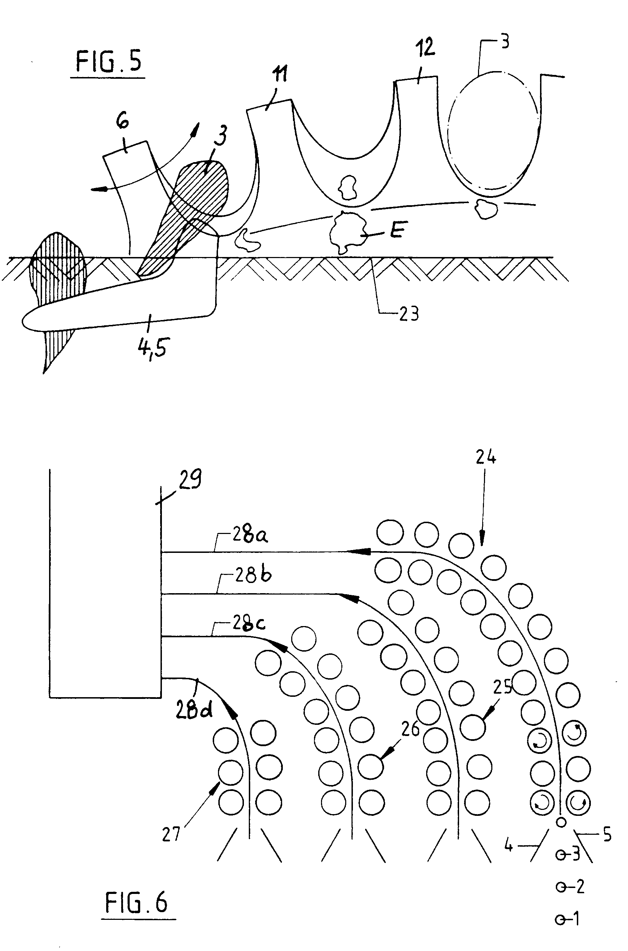

Fig. 4 zeigt einen Schnitt durch eine Ausführungsform eines Rodewerkzeugelementes, bei dem die Lagerung 19 der Rubbelrotoren 7,8 schematisch dargestellt ist. 19 ist ein Lagerring für die Rubbelrotoren 7, 8. Eine Halterung 20 nimmt die Rubbelrotoren auf. Mit 21 sind Lagerzapfenfedern dargestellt, die in den Rubbelrotor eingebettet sind und die aus elastisch nachgiebigem Material 22 bestehen. Mit 23 ist der Erdboden dargestellt. Zwischen den beiden Rubbelelementen 7,8 ist eine Rübe 3 schematisch angedeutet, von der aufgrund der Rubbelbewegung Erdreich E gelöst wird und nach abwärts durch den Spalt zwischen den beiden Werkzeugelementen auf den Boden 23 fällt. in entsprechender Darstellung wie Fig. 4 zeigt Fig. 5 eine Reihe von hintereinander (in Förderrichtung) angeordneten Werkzeugelementen 6, 11, 12 in Verbindung mit einem Rodeschar 4, 5 und mit dem Vorgang des Aushebens der Rüben; die Scharelemente können beim Auftreffen auf Steine oder dergl. Hindernisse entgegen einer Federwirkung schwenkbar ausweichen.

In Fig. 6 ist schematisch eine Abförderstrecke mit mehreren (vier) Reihen von Rubbelelementpaaren 24, 25, 26, 27 dargestellt, die die aus Rüben 1, 2, 3 gebildeten Rübenreihen 28a, 28b, 28c und 28d zwischen sich aufnehmen und die Förderung der Rüben in eine Abfördervorrichtung 29 bewirken. Dietaufrichtung der Rubbelelement-paare verläuft so, daß die dazwischen aufgenommenen Rüben in Förderrichtung bewegt werden, also zur Abfördervorrichtung 29. Wie in Fig. 6 schematisch angedeutet, läßt sich ein gekrümmter Förderweg zur Abförderung der gerodeten Rüben auf besonders einfache Weise erzielen.

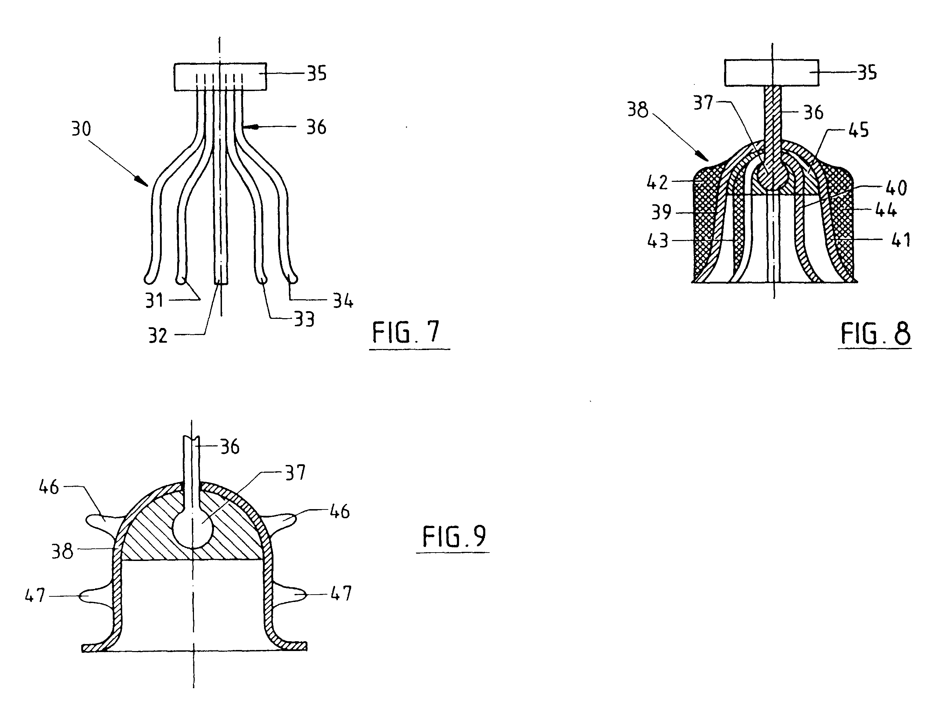

In Fig. 7 ist eine Ausführungsform eines Rubbelrotors 30 schematisch dargestellt, der aus einer Mehrzahl von federnd oder elastisch nachgiebigen Förder- und Reinigungshaken oder -zinken 31, 32, 33, 34 besteht, die in einer Lagerung 35 über den jeweiligen Schaft 36 befestigt sind, und die insgesamt eine tulpen- oder glockenförmige Mantelfläche ergeben.

Eine andere Ausführungsform zeigt Fig. 8, bei der in einer Lagerung 35 ein Schaft 36 mit einem Schaftkopf 37 befestigt ist, der einen Werkzeugkörper 38 aufnimmt, welcher aus federnd oder elastisch nachgiebigen Förder- und Reinigungshaken oder -zinken 39, 40, 41 besteht, die in ihrer Gesamtheit, ähnlich wie in Fig. 7 dargestellt, eine rotationssymmetrische Umrißform ergeben. Die Haken 39, 40, 41 weisen dabei Ansätze, Lappen, Rippen oder dergl. 42, 43, 44 mit einem unteren Umfangsring 45 auf. Mit 46 ist eine Lagermasse für den Schaft 36 bezeichnet.

Bei der Ausführungsform nach Fig. 9, die ähnlich der nach Fig. 8 ist, sind ausgehend von dem Werkzeugkörper 38, der ähnlich wie in Fig. 8 aus Förder- und Reinigungshaken 39, 40, 41 besteht, die in Umfangsrichtung versetzt zueinander angeordnet sind, Stifte, Zapfen, Ansätze, Noppen oder ähnliche, radial nach außen vorstehende Elemente 47, 48, die elastisch oder starr ausgebildet sind, vorgesehen, die bei Rotation des Werkzeug-körpers 38 die Weiterförderung der Rüben und deren Reinigung unterstützen.

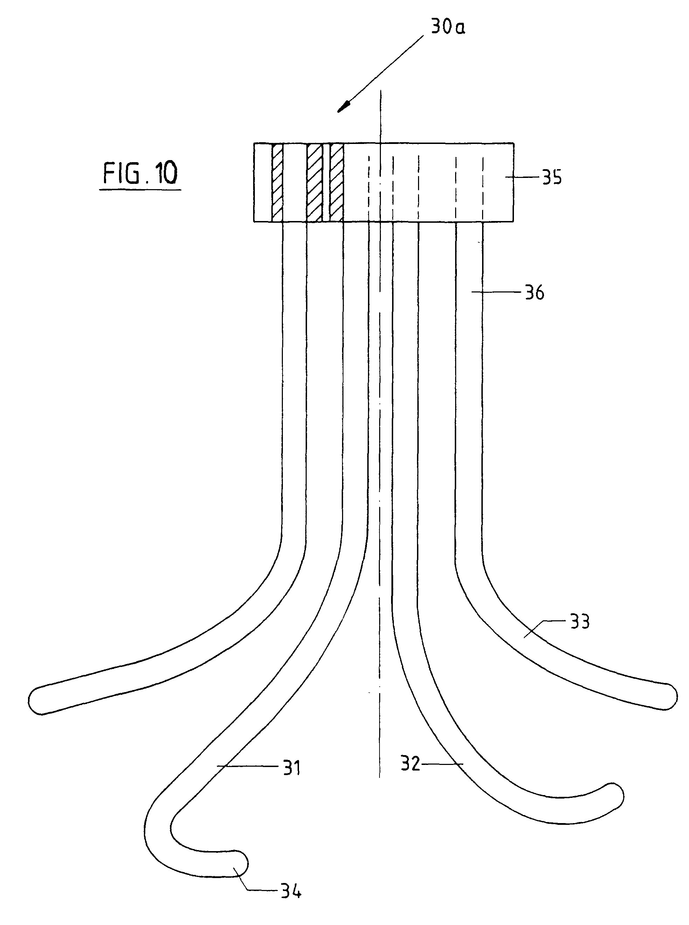

Bei der Ausführungsform nach Fig. 10 besteht der Rubbelkörper 49 aus Haken 50, 51, 52, die in Umfangsrichtung kreisförmig an einem Lagerkörper 53 befestigt sind, wobei die einzelnen Haken vertikale Schäfte 54 aufweisen, die im unteren Bereich nach auswärts gebogen sind, wie mit 55 bezeichnet, wobei die Haken bzw. Zinken am äußersten Ende entgegengesetzt zur Drehrichtung umgebogene Zinkenenden 56 aufweisen.

### Bezugszeichenliste

- 1, 2, 3: Rüben einer Reihe
- 4, 5: Rodewerkzeug pro Rübenreihe bzw. Rübenzeile, die in das Erdreich eingreifen und die Rüben lockern, anheben und nach hinten fördern,
- 6, 7: Reib- oder Rubbelelemente bzw. Rubbelwerkzeuge (Rubbelrotoren) nach unten erweitert (Mini-Siebstern),
- 8, 9: Rotationsachse
- 11, 12, 13: weitere Rubbelelementpaare
- 14: Bewegungs-Förderachse "Reinigungs- und Förderkanal" bzw. "Reinigungs- und Förderstrecke"
- 15: Förderkanal
- 16: Achse des Förderkanals
- 17: Neigungswinkelförderweg
- 18: Boden
- 19: Lagerung der Rubbelrotoren 6, 7
- 20: Halterung zur Aufnahme der Rubbelrotoren
- 21: Lagerzapfenfedern
- 22: elastisch nachgiebiges Material
- 23: Boden
- 24, 25, 26: Reihen von Rubbelelementpaaren
- 27, 28, 29: Förderrichtung des gerodeten Rüben- und Erdstromes
- 30, 30a: Rubbelkörper, bestehend aus
- 31, 32, 33: federnd oder elastisch nachgiebigen Förder- und Reinigungshaken oder - Zinken
- 34: entgegengesetzt zur Drehrichtung umgebogene Zinkenenden
- 35: Lagerung
- 36: Schaft
- 37: Schaftkopf
- 38: Werkzeugkörper
- 39, 40, 41: federnd oder elastisch nachgiebige Förder- und Reinigungshaken
- 42, 43, 44: Ansätze, Lappen, Rippen oder dgl. mit unterem Umfangsring
- 46: Lagermasse für Schaft 36,
- 47, 48: Stifte, Zapfen, Ansätze, Noppen bzw. radial nach außen vorstehende Elemente, elastisch oder starr
- 49: Rubbelkörper
- 50, 51, 52: federnd oder elastisch nachgiebige Förder- und Reinigungshaken bzw. -zinken
- 53: Lagerkörper
- 54: vertikaler Schaft
- 55: unterer, nach außen gebogener Abschnitt
- 56: entgegengesetzt zur Drehrichtung umgebogenes Zinkenende

## Patentansprüche

1. Vorrichtung zum Roden, Abfördern und Reinigen von Wurzelfrüchten, insbes. Zuckerrüben, mit einem Paar von Rodescharen (4, 5) und einem Paar von rotierenden, die Wurzelfrüchte von den Rodescharen aufnehmenden und anhebenden Förderwerkzeugen (6, 7, 8), die als miteinander zusammenwirkende angetriebene Rotationskörper mit sich nach unten vergrößerndem Querschnitt ausgebildet sind und einen Raum zur Aufnahme der Wurzelfrüchte (3) und des Erdreichs zwischen ihren Mantelflächen ausbilden, **dadurch gekennzeichnet, dass** die Förderwerkzeuge als Reib- und Rubbelwerkzeuge (7, 8, 11, 12, 13) mit im wesentlichen stehender Rotationsachse (9, 10) ausgebildet sind, dass die einander zugewandten, miteinander zusammenwirkenden, rotationssymmetrischen Mantelflächen eine etwa glocken- oder kelchförmige Gestalt haben, dass die Mantelflächen elastisch nachgiebig ausgebildet sind, und dass der freie Raum (7, 8) zur Aufnahme der Wurzelfrüchte (3) und des Erdreiches durch die sich nach unten erweiternde Mantelfläche der Reib- bzw. Rubbelwerkzeuge entscheidend verengt ist, derart, dass der dadurch gebildete Spalt (d) einen wesentlich kleineren Durchmesser als die Wurzelfrucht hat und einen Kanal zur Erdreichabführung darstellt.

2. Vorrichtung nach einem der Ansprüche 1, **dadurch gekennzeichnet, daß** die Reibund Rubbelwerkzeuge (7, 8, 11, 12, 13) neigungs- und höhenverstellbar dem Rodeschar anpaßbar und im Abstand über dem Erdboden angeordnet sind.

3. Vorrichtung nach einem der Ansprüche 1 oder 2, **dadurch gekennzeichnet, daß** die Reib- und Rubbelwerkzeuge (7, 8, 11, 12, 13) elastisch nachgiebige Elemente, z.B. Feder-, Kunststoff-, Gummi- oder dgl. Elemente sind.

4. Vorrichtung nach Anspruch 3, **dadurch gekennzeichnet, dass** die Reib- und Rubbelwerkzeuge (7, 8, 11, 12, 13) elastisch nachgiebige Elemente sind, die Verstärkungselemente aufweisen.

5. Vorrichtung nach einem der Ansprüche 1 - 4, **dadurch gekennzeichnet, daß** die Reib- und Rubbelwerkzeuge jeweils von einer Vielzahl von federnd gehaltenen Zinken (31, 34) gebildet sind.

6. Vorrichtung nach einem der Ansprüche 1 - 5, **dadurch gekennzeichnet, dass** die Reib- und Rubbelwerkzeuge in einer Halterung (20) eines Maschinenrahmens gelagert sind, die von einem Lagerring (19) aufgenommen wird, dass die Werkzeuge elastisch nachgiebig ausgebildet sind, und dass eine Lagerzapfenfeder (21) in einen Werkzeugkörper (22) eingebettet ist.

7. Vorrichtung nach einem der Ansprüche 1 - 4, **dadurch gekennzeichnet, dass** jedes Werkzeug (6, 7) als geschlossener, glockenförmiger Körper (22) aus elastisch nachgiebigem Material ausgebildet ist.

8. Vorrichtung nach einem der Ansprüche 1 - 4, **dadurch gekennzeichnet, dass** die Rubbelrotoren (7, 8) in einer Halterung (20) aufgenommen sind, dass Lagerzapfenfedern (21) in den jeweiligen Rubbelrotor (7, 8) eingebettet sind, und dass die Lagerzapfenfedern aus elastische nachgiebigen, Material bestehen.

9. Vorrichtung nach einem der Ansprüche 1 - 8, **dadurch gekennzeichnet, dass** eine Vielzahl von hintereinander geschalteten Werkzeugpaaren (6, 11, 12, 13) pro zu rodender Wurzelfrüchtereihe zu einer Reinigungs- und Förderstrecke zusammengefasst bzw. ausgebildet sind.

10. Vorrichtung nach Anspruch 9, **dadurch gekennzeichnet, daß** die Reinigungs- und Förderstrecke für den Weitertransport der Wurzelfrüchte waagerecht oder geneigt ansteigend ausgebildet ist.

11. Vorrichtung nach einem der Ansprüche 1 - 10, **dadurch gekennzeichnet, daß** die sich nach unten erweiternde Unterseite jeweils zweier miteinander zusammenwirkender Reib- oder Rubbelwerkzeuge etwa in Form eines Minisiebsternes ausgebildet sind.

12. Vorrichtung nach einem der Ansprüche 1 - 11, **dadurch gekennzeichnet, daß** die Anzahl der Reib- und Rubbelwerkzeugpaare gleich der Anzahl der Wurzelfrüchtereihen ist und quer zur Förderrichtung am Maschinenrahmen befestigt ist, und daß an der auslaufenden Wurzelfrüchtestrecke Siebbänder oder dgl. Fördervorrichtungen für den Weitertransport der gerodeten und gereinigten Wurzelfrüchte vorgesehen sind.

13. Vorrichtung nach einem der Ansprüche 1 - 12, **dadurch gekennzeichnet, daß** die Reib- und Rubbelwerkzeuge eines jeden Werkzeugpaares in Förderrichtung zueinander versetzt, z.B. zick-zackförmig angeordnet sind.

14. Vorrichtung nach einem der Ansprüche 1 - 13, **dadurch gekennzeichnet, daß** die Werkzeuge mit hoher Drehzahl im Vergleich zur Fahrgeschwindigkeit, z.B. 400 U/min, und in der Umfangsgeschwindigkeit regelbar angetrieben sind.

## Claims

1. Apparatus for lifting, conveying away and cleaning root crops, in particular sugar beet, having a pair of lifting shares (4, 5) and a pair of rotating conveying tools (6, 7, 8) which pick up and raise the root crops from the lifting shares, are designed as driven rotating elements which interact with one another and have a cross section which increases downwards, and form a space between their circumferential surfaces for receiving the root crops (3) and the soil, **characterized in that** the conveying tools are designed as frictional and rubbing tools (7, 8, 11, 12, 13) with an essentially vertical rotational axis (9, 10), **in that** the rotationally symmetrical circumferential surfaces which face one another and interact with one another have an approximately bell- or goblet-shaped design, **in that** the circumferential surfaces are of elastically compliant design, and **in that** the free space (7, 8) for receiving the root crops (3) and the soil is critically constricted by the downwardly widening circumferential surface of the frictional and rubbing tools in such a manner that the resultantly formed gap (d) has a substantially smaller diameter than the root crop and constitutes a channel for removing the soil.

2. Apparatus according to Claim 1, **characterized in that** the frictional and rubbing tools (7, 8, 11, 12, 13) can be adapted in an inclination- and height-adjustable manner to the lifting share and are arranged at a distance above the ground.

3. Apparatus according to one of Claims 1 or 2, **characterized in that** the frictional and rubbing tools (7, 8, 11, 12, 13) are elastically compliant elements, for example spring elements, plastic elements, rubber elements or similar elements.

4. Apparatus according to Claim 3, **characterized in that** the frictional and rubbing tools (7, 8, 11, 12, 13) are elastically compliant elements which have reinforcing elements.

5. Apparatus according to one of Claims 1-4, **characterized in that** the frictional and rubbing tools are in each case formed by a multiplicity of tines (31, 34) held in a resilient manner.

6. Apparatus according to one of Claims 1-5, **characterized in that** the frictional and rubbing tools are mounted in a securing device (20) on a machine frame, the said device being held by a bearing ring (19), **in that** the tools are of elastically compliant design, and **in that** a bearing journal spring (21) is embedded in a tool body (22).

7. Apparatus according to one of Claims 1-4, **characterized in that** each tool (6, 7) is designed as a closed, bell-shaped body (22) made of elastically compliant material.

8. Apparatus according to one of Claims 1-4, **characterized in that** the rubbing rotors (7, 8) are held in a securing device (20), **in that** bearing journal springs (21) are embedded in the respective rubbing rotor (7, 8), and **in that** the bearing journal springs consist of an elastic, compliant material.

9. Apparatus according to one of Claims 1-8, **characterized in that** a multiplicity of pairs of tools (6, 11, 12, 13) connected one behind another are combined or designed to form one cleaning and conveying section per row of root crops to be lifted.

10. Device according to Claim 9, **characterized in that** the cleaning and conveying section is designed such that it is horizontal or inclined upwards for the further transportation of the root crops.

11. Apparatus according to one of Claims 1-10, **characterized in that** the downwardly widening lower side of in each case two frictional or rubbing tools interacting with each other is designed approximately in the shape of a mini screening star.

12. Apparatus according to one of Claims 1-11, **characterized in that** the number of pairs of frictional and rubbing tools is equal to the number of rows of root crops and said pairs are fastened to the machine frame transversely with respect to the conveying direction, and **in that** screening belts or similar conveying devices for the further transportation of the lifted and cleaned root crops are provided at the end of the section of root crops.

13. Apparatus according to one of Claims 1-12, **characterized in that** the frictional and rubbing tools of each pair of tools are arranged offset with respect to one another in the conveying direction, e.g. in the shape of a zigzag.

14. Apparatus according to one of Claims 1-13, **characterized in that** the tools are driven at a high rotational speed in comparison with the driving speed, for example 400 rpm, and in a manner such that they can be regulated in circumferential speed.

## Revendications

1. Dispositif pour arracher, déplacer et nettoyer des fruits radiculaires, en particulier des betteraves sucrières, avec une paire de socs d'arracheuse (4,5) et une paire d'outils de transport (6, 7, 8) rotatifs récupérant et soulevant les fruits radiculaires des socs d'arracheuse, les dits outils étant conçus sous la forme de corps rotatifs solidaires les uns des autres et avec section transversale s'élargissant vers le bas, et formant, entre leurs surfaces latérales, un espace de réception des fruits radiculaires (3) et de la terre, **caractérisé en ce que** les outils de transport se présentent sous la forme d'outils de frottement ou de terrassement (7, 8, 11, 12, 13) avec axe de rotation (9, 10) essentiellement vertical, **en ce que** les surfaces latérales tournées les unes vers les autres, solidaires les unes des autres et à symétrie de révolution ont la forme d'une cloche ou d'une coupe, **en ce que** les surfaces latérales sont résilientes et **en ce que** l'espace libre (7, 8) destiné à recueillir les fruits radiculaires (3) et la terre a été sensiblement réduit par la surface latérale des outils de frottement ou de terrassement s'étendant vers le bas, de telle sorte que la fente (d) ainsi formée présente un diamètre nettement plus réduit que le fruit radiculaire et constitue un canal destiné à évacuer la terre.

2. Dispositif selon la revendication 1, **caractérisé en ce que** la déclivité et la hauteur des outils de frottement ou de terrassement (7, 8, 11, 12, 13) peuvent être adaptées en fonction du soc d'arracheuse et **en ce que** les dits outils peuvent être disposés au-dessus du sol, à une certaine distance.

3. Dispositif selon la revendication 1 ou 2, **caractérisé en ce que** les outils de frottement ou de terrassement (7, 8, 11, 12, 13) sont des éléments résilients comme des éléments de ressort, des éléments en plastique, en caoutchouc ou similaires.

4. Dispositif selon la revendication 3, **caractérisé en ce que** les outils de frottement ou de terrassement (7, 8, 11, 12, 13) sont des éléments résilients présentant des éléments de renforcement.

5. Dispositif selon une des revendications 1 à 4, **caractérisé en ce que** les outils de frottement ou de terrassement sont constitués chacun d'une multitude de griffes maintenues de manière élastique.

6. Dispositif selon une des revendications 1 à 5, **caractérisé en ce que** les outils de frottement ou de terrassement sont disposés dans une fixation (20) d'un bâti de machine reçue par une bague de palier (19), **en ce que** les outils sont résilients et **en ce que** un ressort à tourillons (21) est encastré dans un corps d'outil (22).

7. Dispositif selon une des revendications 1 - 4, **caractérisé en ce que** chaque outil (6, 7) se présente sous la forme d'un corps (22) fermé en forme de cloche constitué d'un matériau résilient.

8. Dispositif selon une des revendications 1 - 4, **caractérisé en ce que** les rotors de terrassement (7, 8) sont logés dans une attache (20), **en ce que** les ressorts à tourillons (21) sont encastrés dans les rotors de terrassement et **en ce que** les ressorts à tourillon se composent d'un matériau résilient.

9. Dispositif selon une des revendications 1 - 8, **caractérisé en ce que** de nombreuses paires d'outils (6, 11, 12, 13) commutées les unes derrière les autres pour chaque rangée de fruits radiculaires à arracher sont réunies en ou forment une voie de nettoyage et de roulage.

10. Dispositif selon la revendication 9, **caractérisé en ce que** la voie de nettoyage et de roulage est horizontale ou en légère pente ascendante pour l'acheminement des fruits radiculaires.

11. Dispositif selon une des revendications 1 à 10, **caractérisé en ce que** le côté inférieur s'étendant vers le bas de deux outils de frottement ou de terrassement solidaires l'un de l'autre se présente par exemple sous la forme d'une mini-étoile perforée.

12. Dispositif selon une des revendications 1 à 11, **caractérisé en ce que** le nombre de paires d'outils de frottement ou de terrassement correspond au nombre de rangées de fruits radiculaires, **en ce que** les paires d'outils sont fixées sur le bâti de machine, transversalement par rapport à la direction de transport, et **en ce que** des bandes perforées ou dispositifs destinés à transporter les fruits radiculaires arrachés et nettoyés ont été prévus à la fin de la voie des fruits radiculaires

13. Dispositif selon une des revendications 1 à 12, **caractérisé en ce que** les outils de frottement ou de terrassement de chaque paire d'outils sont disposés en alternance dans la direction de transport, en zigzag par exemple.

14. Dispositif selon une des revendications 1 à 13, **caractérisé en ce que** les outils présentent un régime élevé par rapport à la vitesse de transport, de 400 t/min, par exemple, et **en ce que** la vitesse périphérique peut être réglée.
